(19) Europäisches Patentamt
European Patent Office
Office européen des brevets

(11) EP 2 657 292 B1

(12) **EUROPEAN PATENT SPECIFICATION**

(45) Date of publication and mention of the grant of the patent:
**04.09.2019 Bulletin 2019/36**

(21) Application number: **10861207.8**

(22) Date of filing: **29.12.2010**

(51) Int Cl.:
***C08L 33/12*** (2006.01) ***C08L 51/04*** (2006.01)
***C08L 43/02*** (2006.01) ***C09K 21/12*** (2006.01)
***C09K 21/14*** (2006.01)

(86) International application number:
**PCT/KR2010/009531**

(87) International publication number:
**WO 2012/086867 (28.06.2012 Gazette 2012/26)**

# (54) ACRYLIC COPOLYMER RESIN COMPOSITION

ACRYLCOPOLYMERHARZZUSAMMENSETZUNG

COMPOSITION DE RÉSINE COPOLYMÈRE ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2010 KR 20100133980**

(43) Date of publication of application:
**30.10.2013 Bulletin 2013/44**

(73) Proprietor: **Lotte Advanced Materials Co., Ltd.**
**Yeosu-si**
**Jeollanam-do (KR)**

(72) Inventors:
- **LEE, Jin Seong**
**Uiwang-si**
**Gyeonggi-do 437-711 (KR)**
- **YOON, Jong Tae**
**Uiwang-Si**
**Gyeonggi-Do (KR)**
- **KWON, Kee Hae**
**Uiwang-si**
**Gyeonggi-do 437-711 (KR)**
- **CHUNG, Jin Hwa**
**Uiwang-Si**
**Gyeonggi-Do (KR)**
- **KIM, Man Suk**
**Uiwang-Si**
**Gyeonggi-Do (KR)**
- **KANG, Yong Hee**
**Uiwang-si**
**Gyeonggi-do 437-711 (KR)**
- **LEE, Byun Kun**
**Uiwang-si**
**Gyeonggi-do 437-711 (KR)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**WO-A1-2008/120854**
**KR-A- 20080 089 122**
**KR-A- 20100 067 235**
**KR-B1- 100 832 518**
**US-A- 3 030 347**
**US-A1- 2009 043 047**
**US-B1- 6 319 966**

- **EBDON, J. R. ET AL.: 'Thermal Degradation and Flame Retardance in Copolymers of Methylmethacrylate with Diethyl(methacryloyloxymethyl)phosphonate.' POLYM. DEGRAD. STAB. vol. 70, 2000, pages 425 - 436, XP004295063**
- **PRICE, D. ET AL.: 'Ignition Temperatures and Pyrolysis of a Flame-retardant Methyl Methacrylate Copolymer Containing Diethyl (methacryloyloxymethyl)phosphonate Units.' POLYM. INT. vol. 49, 2000, pages 1164 - 1168, XP055068918**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 657 292 B1

## Description

[Technical Field]

The present invention relates to an acrylic copolymer resin composition, and more particularly to an acrylic copolymer resin composition that meets all requirements in terms of flame retardancy, scratch resistance, impact resistance and transparency.

[Background Art]

Thermoplastic resins have lower specific gravities, better moldability and better impact resistance than glass and metal. With the recent trend toward low-priced, large-scale, lightweight electrical/electronic products, plastic articles have rapidly replaced glass and metal in many applications.

Under such circumstances, the functions and appearance performance of thermoplastic resins as exterior materials are gaining importance. Thermoplastic resins are increasingly required to have good resistance to external impacts and scratches and good flame retardancy representing high fire resistance. Another requirement of thermoplastic resins is high transparency, which is advantageous in obtaining high colorability and satisfactory design effects of design colors such as gradation colors. Generally, when either of the required physical properties of thermoplastic resins, such as scratch resistance, flame retardancy, impact resistance and transparency, is improved, deterioration of the other physical properties is inevitable. Thus, there is a need to develop a resin composition that meets all requirements in terms of flame retardancy, scratch resistance, impact resistance and transparency.

WO 2008/120854 A1 discloses a flameproof copolymer comprising repeating units of 80-99 % by weight of a (meth)acrylic monomer and 1-20 % by weight of a vinyl-containing phosphorous monomer. US 6 319 966B1 refers to a polymethylmethacrylate (PMMA) resin with an impact modifier capsulated therein. US 3 030 347 A relates to dialkylphosphonoalkyl acrylate and methacrylate copolymers.

[Disclosure]

[Technical Problem]

An aspect of the present invention is to provide an acrylic copolymer resin composition with excellent flame retardancy, scratch resistance, impact resistance and transparency.

Another aspect of the present invention is to provide a molded article including the acrylic copolymer resin composition.

[Technical Solution]

In accordance with the present invention, an acrylic copolymer resin composition according to claim 1 is provided. The acrylic copolymer resin composition includes

(A) a phosphorus-containing acrylic copolymer,
(B) a polymethyl methacrylate, and
(C) a transparent soft acrylate resin.

In one embodiment, the phosphorus-containing acrylic copolymer may be a copolymer of monomers represented by Formula 1 and 2:

[Formula 1]

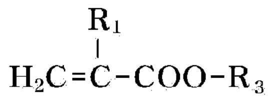

wherein $R_1$ is -H or $-(CH_2)_n-CH_3$, n is an integer from 0 to 5, $R_3$ is

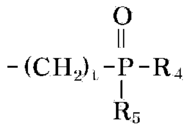,

t is an integer from 0 to 10, $R_4$ and $R_5$ are each independently $-(O)_p(CH_2)_qX$, p is an integer from 0 or 1, q is an integer from 0 to 5, and X comprises methyl, cyclohexyl, phenyl, methylphenyl, methylethylphenyl, propylphenyl, methoxyphenyl, cyclohexylphenyl, chlorophenyl, bromophenyl, phenylphenyl and benzylphenyl groups; and

[Formula 2]

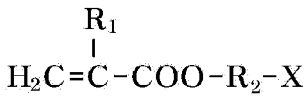

wherein $R_1$ is -H or $-(CH_2)_n-CH_3$, n is an integer from 0 to 5, $R_2$ is $-(CH_2)_m-$, m is an integer from 0 to 10, and X is selected from the group consisting of methyl, cyclohexyl, phenyl, methylphenyl, methylethylphenyl, propylphenyl, methoxyphenyl, cyclohexylphenyl, chlorophenyl, bromophenyl, phenylphenyl and benzylphenyl groups.

In one embodiment, the monomer represented by Formula 1 may be included in an amount of at least 35 mol%, based on a base resin including (A) and (B).

In one embodiment, the monomer represented by Formula 1 may be included in an amount of 20 to 70 mol%, based on the phosphorus-containing acrylic copolymer.

In one embodiment, the phosphorus-containing acrylic copolymer may have a weight average molecular weight of 50,000 to 200,000 g/mol.

The phosphorus-containing acrylic copolymer is included in an amount of 40 to 85% by weight, based on the total weight of the base resin including (A) and (B).

In one embodiment, the polymethyl methacrylate may have a weight average molecular weight of 30,000 to 150,000 g/mol.

The polymethyl methacrylate is included in an amount of 15 to 60% by weight, based on the total weight of the base resin including (A) and (B).

The transparent soft acrylate resin is included in an amount of 1 to 18 parts by weight, based on 100 parts by total weight of the base resin including (A) and (B).

In one embodiment, the acrylic copolymer resin composition may further include a phosphorus-based flame retardant.

[Advantageous Effects]

The acrylic copolymer resin composition of the present invention is excellent in flame retardancy, scratch resistance, impact resistance and transparency. In addition, the acrylic copolymer resin composition of the present invention is prevented from deterioration in transmittance despite increased flame retardancy, scratch resistance and impact resistance.

[Best Mode]

Acrylic Copolymer Resin Composition

The present invention provides an acrylic copolymer resin composition including

(A) a phosphorus-containing acrylic copolymer,
(B) a polymethyl methacrylate, and
(C) a transparent soft acrylate resin.

(A) Phosphorus-containing Acrylic Copolymer

The phosphorus-containing acrylic copolymer may be a copolymer of monomers represented by Formula 1 and 2:

[Formula 1]

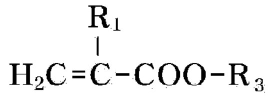

wherein $R_1$ is -H or $-(CH_2)_n-CH_3$, n is an integer from 0 to 5, $R_3$ is

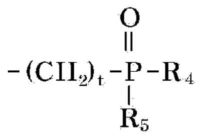

,

t is an integer from 0 to 10, $R_4$ and $R_5$ are each independently $-(O)_p(CH_2)_qX$, p is an integer from 0 or 1, q is an integer from 0 to 5, and X comprises methyl, cyclohexyl, phenyl, methylphenyl, methylethylphenyl, propylphenyl, methoxyphenyl, cyclohexylphenyl, chlorophenyl, bromophenyl, phenylphenyl and benzylphenyl groups; and

[Formula 2]

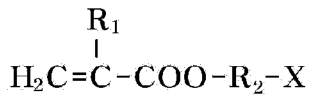

wherein $R_1$ is -H or $-(CH_2)_n-CH_3$, n is an integer from 0 to 5, $R_2$ is $-(CH_2)_m-$, m is an integer from 0 to 10, and X comprises methyl, cyclohexyl, phenyl, methylphenyl, methylethylphenyl, propylphenyl, methoxyphenyl, cyclohexylphenyl, chlorophenyl, bromophenyl, phenylphenyl and benzylphenyl groups.

The monomer represented by Formula 1 may be included in an amount of at least 35 mol%, preferably 35 to 50 mol%, based on the base resin including the phosphorus-containing acrylic copolymer (A) and the polymethyl methacrylate (B). Within this range, not only improved transparency, scratch resistance and impact resistance but also high flame retardancy rating can be ensured.

The monomer represented by Formula 1 may be included in an amount of 20 to 70 mol%, preferably 30 to 55 mol%, based on the phosphorus-containing acrylic copolymer. Within this range, polymerization stability and flame retardancy can be advantageously ensured.

The monomer represented by Formula 1 may include at least one phosphonate selected from the group consisting of, but not limited to, dimethyl(methacryloyloxymethyl)phosphonate, diethyl(methacryloyloxymethyl)phosphonate, dimethyl(acryloyloxymethyl)phosphonate, diethyl(acryloyloxymethyl)phosphonate, methylethyl(methacryloyloxymethyl)phosphonate, methylethyl(acryloyloxymethyl)phosphonate, dimethyl(methacryloyloxyethyl)phosphonate, diethyl(methacryloyloxyethyl)phosphonate, and dipropyl(methacryloyloxyethyl)phosphonate.

The monomer represented by Formula 2 may include at least one methacrylate or acrylate selected from the group consisting of, but not limited to, methyl methacrylate, ethyl methacrylate, propyl methacrylate, methyl acrylate, ethyl acrylate, propyl acrylate, cyclohexyl methacrylate, and phenyl methacrylate.

The phosphorus-containing acrylic copolymer may be prepared by bulk polymerization, emulsion polymerization or suspension polymerization of a mixture of the monomers represented by Formula 1 and 2. Suspension polymerization may be preferred. The polymerization temperature and time may be appropriately determined. For example, the polymerization may be performed at a temperature of 65 to 125 °C, preferably 70 to 120 °C, for about 2 to about 8 hours, but is not limited to these conditions. The monomer mixture may further include at least one additive selected from polymerization initiators, chain transfer agents, suspension stabilizers, suspension stabilization aids, flame retardants, surfactants, nucleating agents, coupling agents, fillers, plasticizers, impact-reinforcing agents, lubricants, antibacterial agents, release agents, heat stabilizers, antioxidants, light stabilizers, compatibilizers, inorganic additives, colorants, stabilizers, lubricating agents, antistatic agents, pigments, dyes, and flame-proofing agents.

The phosphorus-containing acrylic copolymer may have a weight average molecular weight of 50,000 to 200,000 g/mol, preferably 80,000 to 150,000 g/mol. Within this range, impact resistance is maintained and good polymerization stability can be ensured.

The phosphorus-containing acrylic copolymer is included in an amount of 40 to 85% by weight, preferably 65 to 85% by weight, based on the total weight of the base resin including the phosphorus-containing acrylic copolymer (A) and the polymethyl methacrylate (B). Within this range, transmittance may be maintained and flame retardancy can be advantageously ensured.

(B) Polymethyl Methacrylate

The polymethyl methacrylate may be prepared from a methyl methacrylate monomer by a suitable polymerization process.

The polymethyl methacrylate may have a weight average molecular weight of 30,000 to 150,000 g/mol, preferably 35,000 to 95,000 g/mol. Within this range, good transmittance, flowability and impact strength can be ensured.

The polymethyl methacrylate is included in an amount of 15 to 60% by weight, preferably 15 to 35% by weight, based on the total weight of the base resin including the phosphorus-containing acrylic copolymer (A) and the polymethyl methacrylate (B). Within this range, transmittance can be advantageously maintained.

(C) Transparent Soft Acrylate Resin

The transparent soft acrylate resin can improve the impact resistance of the mixture of the phosphorus-containing acrylic copolymer and the polymethyl methacrylate while maintaining the transparency of the mixture. The mixing of the polymethyl methacrylate with the phosphorus-containing acrylic copolymer leads to an increase in flame retardancy rating, impact resistance and scratch resistance but may cause a decrease in transmittance. The transparent soft acrylate resin can maintain the transmittance of the mixture of the phosphorus-containing acrylic copolymer and the polymethyl methacrylate.

The transparent soft acrylate resin may have a refractive index of 1.485 to 1.51. Within this range, high transmittance can be advantageously ensured.

The transparent soft acrylate resin is included in an amount of 1 to 18 parts by weight, preferably 5 to 15 parts by weight, more preferably 5 to 10 parts by weight, based on 100 parts by weight of the base resin including the phosphorus-containing acrylic copolymer (A) and the polymethyl methacrylate (B). Within this range, improved impact resistance can be obtained, and flame retardancy rating and transmittance can be prevented from deterioration.

The glass transition temperature of the transparent soft acrylate resin may be from 15 to 30 °C. The transparent soft acrylate resin has a surface hardness of 70 or less, as measured on a 0.2 ± 0.1 μm thick specimen using a durometer (GS-706N type A, TECLOCK). The transparent soft acrylate resin has a total light transmittance of 88% or more, as evaluated on a 3 mm thick specimen in accordance with ASTM D1003.

The transparent soft acrylate resin may have a structure in which a vinyl monomer is grafted onto an acrylic rubber core. The vinyl monomer may include at least one monomer selected from the group consisting of, but not limited to, aromatic vinyl monomers, cyanide vinyl monomers, (meth)acrylic monomers, styrenic monomers, acrylonitrile, styrene, and acrylate monomers. For example, the transparent soft acrylate resin may have a structure in which methyl methacrylate and styrene are grafted onto a butyl acrylate rubber core, but is not limited to this structure.

The acrylic copolymer resin composition may further include a phosphorus-based flame retardant. The phosphorus-based flame retardant is added to impart the resin composition with flame retardancy. The phosphorus-based flame retardant may be any of those known in the art, including red phosphorus, phosphonates and phosphinates.

For example, the phosphorus-based flame retardant may be represented by Formula 3:

[Formula 3]

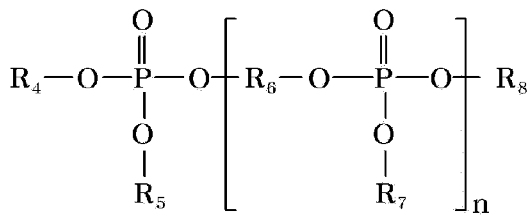

wherein $R_4$, $R_5$, $R_7$ and $R_8$ are each independently a $C_6$-$C_{20}$ aryl group or a $C_6$-$C_{20}$ aryl group substituted with $C_1$-$C_{20}$ alkyl group, $R_6$ is a moiety derived from resorcinol, hydroquinol, bisphenol-A or bisphenol-S as a dialcohol, and n is an integer from 0 to 10.

The phosphorus-based flame retardant of Formula 3 wherein n is 0 may be, for example, triphenyl phosphate, tricresyl phosphate, cresyl diphenyl phosphate, trixylyl phosphate, tri(2,4,6-trimethylphenyl)phosphate, tri(2,4-di-tert-butylphenyl)phosphate or tri(2,6-di-tert-butylphenyl)phosphate. The phosphorus-based flame retardant of Formula 3 wherein n is 1 may be, for example, resorcinol bis(diphenyl phosphate), hydroquinol bis(diphenyl phosphate), bisphenol A-bis(diphenyl phosphate), resorcinol bis(2,6-di-tert-butylphenyl phosphate) or hydroquinol bis(2,6-dimethylphenyl phosphate). The phosphorus-based flame retardant of Formula 3 wherein n is 2 or greater may exist in the form of an oligomeric mixture.

Alternatively, the phosphorus-based flame retardant may be represented by Formula 4:

[Formula 4]

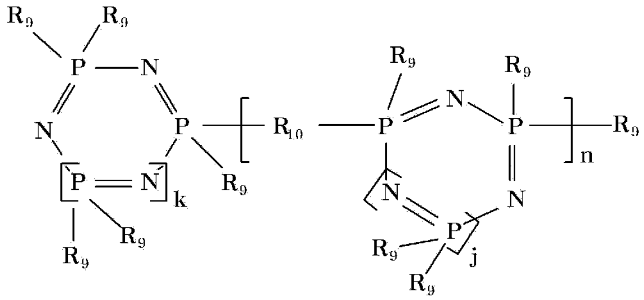

wherein each $R_9$ represents a substituent independently selected from $C_1$-$C_{20}$ alkyl groups, $C_6$-$C_{20}$ aryl groups, $C_6$-$C_{20}$ aryl groups substituted with $C_1$-$C_{20}$ alkyl, $C_6$-$C_{20}$ aralkyl groups, $C_1$-$C_{20}$ alkoxy groups, $C_6$-$C_{20}$ aryloxy groups, amino groups, or hydroxyl groups, k and j are each independently an integer from 0 to 10, the $C_1$-$C_{20}$ alkoxy groups or $C_6$-$C_{20}$ aryloxy groups may be optionally substituted with at least one $C_1$-$C_{20}$ alkyl groups, $C_6$-$C_{20}$ aryl groups, amino groups or hydroxyl groups, $R_{10}$ is a moiety derived from a $C_6$-$C_{20}$ dioxyaryl group or a $C_6$-$C_{20}$ dioxyaryl group substituted with $C_1$-$C_{20}$ alkyl, and n representing the number-average degree of polymerization is an average of 0.3 to 3.

The phosphorus-based flame retardant may be included in an amount of 0 to 20 parts by weight, preferably 0 to 10 parts by weight, based on 100 parts by weight of the acrylic copolymer resin composition.

The acrylic copolymer resin composition may further include one or more additives. Examples of such additives may include, but are not limited to, anti-drip agents, impact-reinforcing agents, antioxidants, plasticizers, heat stabilizers, light stabilizers, compatibilizers, pigments, dyes, inorganic additives, antibacterial agents, and antistatic agents.

The resin composition of the present invention may have a flame retardancy rating of VI or V0, as evaluated on 1/16", 1/12", 1/10" and 1/8" thick specimens in accordance with UL94. The resin composition of the present invention may have a total light transmittance of 85% or more, as evaluated on a 2.5 mm thick specimen in accordance with ASTM D1003. The resin composition of the present invention may have a scratch width of 260 $\mu$m to 290 $\mu$m, as measured on a 3.2 mm thick specimen by a ball-type scratch profile (BSP) test. The resin composition of the present invention may have an impact strength of 10 to 30 kgf.cm/cm, as measured on a 1/4" thick specimen in accordance with ASTM D-256.

The resin composition of the present invention can be prepared by a suitable method known in the art. For example, the resin composition of the present invention may be prepared in the form of pellets. In this case, the constituent components and optionally other additives are simultaneously mixed, melt-extruded in an extruder, and pelletized. The pellets may be molded into a plastic article by injection molding or extrusion molding.

The present invention also provides a molded article produced by molding the acrylic copolymer resin composition. Examples of molding processes suitable for the production of the molded article include, but are not limited to, extrusion, injection molding and casting, which are widely known to those skilled in the art.

[Mode for Invention]

Next, the present invention will be better appreciated from the following examples and comparative examples. It should be understood that these examples are provided for illustration only and are not to be construed in any way as limiting the scope of the present invention.

Descriptions of details apparent to those skilled in the art will be omitted.

**EXAMPLES**

The specifications of components used in Examples 1-6 and Comparative Examples 1-7 are as follows:

(A1) A phosphorus-containing acrylic copolymer having a weight average molecular weight of 150,000 g/mol was prepared by suspension polymerization of 50 mol% of methyl methacrylate and 50 mol% of diethyl(acryloyloxyethyl)phosphonate.

(A2) A phosphorus-containing acrylic copolymer having a weight average molecular weight of 80,000 g/mol was prepared by suspension polymerization of 50 mol% of methyl methacrylate and 50 mol% of diethyl(acryloyloxymethyl)phosphonate.

(B1) A polymethyl methacrylate having a weight average molecular weight of 90,000 g/mol was used.
(B2) A polymethyl methacrylate having a weight average molecular weight of 35,000 g/mol was used.
(C) A core-shell type transparent soft acrylate resin (Kane AceM-210, Kaneka) was used. The transparent soft acrylate resin had a core composed of butyl acrylate and a shell composed of MMA(methyl methacrylate) and styrene.

**Examples 1-6 and Comparative Examples 1-7**

The components were mixed in the amounts (parts by weight, based on solid content) shown in Tables 1 and 2, and then a heat stabilizer and an antioxidant were added thereto to prepare resin compositions. Each of the resin compositions was melted, kneaded and extruded using a twin-screw extruder (L/D = 35, diameter = 45 mm). The extrudate was produced in the form of pellets. The pellets were processed into a 100 x 100 mm specimen for scratch resistance evaluation, 1/16", 1/12", 1/10" and 1/8" thick specimens for flame retardancy evaluation, a 1/4" thick specimen for Izod unnotched impact strength evaluation, and a 2.5 mm thick specimen for the transmittance measurement using a 10 oz injection molding machine at 200-220 °C. After standing at 23 °C and 50% relative humidity for 48 hr, the physical properties of the specimens were evaluated. The results are shown in Tables 3 and 4.
The impact strength (kgf.cm/cm) of the specimen was measured according to ASTM D-256.
The total light transmittance (%) of the specimen was evaluated according to ASTM D1003. Specifically, the total light transmittance of the specimen was determined using a haze meter (NDH 2000, Nippon Denshoku) according to the following equation:

$$\text{Total light transmittance (\%)} = (\text{Light transmitted through the specimen})/(\text{Light incident on the specimen}) \times 100$$

It is estimated that the total light transmittance is proportional to transparency.
The flame retardancy of the specimens was evaluated according to UL 94.
The char yield (%) at 700 °C was determined by measuring the remaining amount of char at 700 °C after TGA at a heating rate of 20 °C/min under a nitrogen atmosphere, and calculating the proportion of the remaining amount relative to the initial amount of char.
The scratch resistance (BSP width, μm) of the specimen was measured by a ball-type scratch profile (BSP) test. Specifically, the resin surface was scratched (10-20 mm long) using a spherical metal tip having a diameter of 0.7 mm at a load of 1,000 g and a rate of 75 mm/min. The profile of the scratches was measured by surface scanning using a metal stylus tip (diameter = 2 μm) of a contact type surface profile analyzer (XP-1). The scratch width (μm), indicative of scratch resistance, was determined from the measured scratch profile. A reduction in scratch width means an increase in scratch resistance.

TABLE 1

| | Example | | | | | |
|---|---|---|---|---|---|---|
| | 1 | 2 | 3 | 4 | 5 | 6 |
| A1 | 70 | - | 70 | - | 80 | 70 |
| A2 | - | 70 | - | 70 | - | - |
| B1 | 30 | 30 | - | - | 20 | - |
| B2 | - | - | 30 | 30 | - | 30 |
| C | 10 | 10 | 10 | 10 | 10 | 15 |
| Remarks | 35 | 35 | 35 | 35 | 40 | 35 |

TABLE 2

| | Com parative Example | | | | | | |
|---|---|---|---|---|---|---|---|
| | 1 | 2 | 3 | 4 | 5 | 6 | 7 |
| A1 | 60 | 70 | - | 70 | - | 80 | 70 |
| A2 | - | - | 70 | - | 70 | - | - |

(continued)

| | Com parative Example | | | | | | |
|---|---|---|---|---|---|---|---|
| | 1 | 2 | 3 | 4 | 5 | 6 | 7 |
| B1 | 40 | 30 | 30 | - | - | 20 | - |
| B2 | - | - | - | 30 | 30 | - | 30 |
| C | - | - | - | - | - | - | 20 |
| Remarks | 30 | 35 | 35 | 35 | 35 | 40 | 35 |
| ※ Remarks: Contents (mol%) of the monomer represented by Formula 1 in the base resin including (A1) or (A2) and (B1) or (B2) | | | | | | | |

TABLE 3

| | | Example | | | | | |
|---|---|---|---|---|---|---|---|
| | | 1 | 2 | 3 | 4 | 5 | 6 |
| Impact strength (kgf.cm/cm) | | 20 | 15 | 15 | 13 | 11 | 23 |
| Total light transmittance (%) | | 87% | 86% | 88% | 86% | 88% | 84% |
| Flame retardancy rating | 1/16" | V1 | V1 | V1 | V1 | V1 | Fail |
| | 1/12" | V0 | V0 | V0 | V0 | V0 | Fail |
| | 1/10" | V0 | V0 | V0 | V0 | V0 | V1 |
| | 1/8" | V0 | V0 | V0 | V0 | V0 | V1 |
| Char yield (%) | | 19.3 | 18.5 | 18.1 | 19.1 | 18.7 | 15.7 |
| BSP width (μm) | | 270 | 269 | 268 | 273 | 277 | 283 |

TABLE 4

| | | Comparative Example | | | | | | |
|---|---|---|---|---|---|---|---|---|
| | | 1 | 2 | 3 | 4 | 5 | 6 | 7 |
| Impact strength (kgf.cm/cm) | | 11 | 10 | 8 | 7 | 7 | 5 | 30 |
| Total light transmittance (%) | | 79% | 82% | 80% | 84% | 81% | 83% | 76% |
| Flame retardancy rating | 1/16" | Fail | V0 | V0 | V0 | V0 | V0 | Fail |
| | 1/12" | Fail | V0 | V0 | V0 | V0 | V0 | Fail |
| | 1/10" | Fail | V0 | V0 | V0 | V0 | V0 | Fail |
| | 1/8" | Fail | V0 | V0 | V0 | V0 | V0 | Fail |
| Char yield (%) | | 6 | 21 | 20.5 | 21.3 | 19.8 | 21 | 14 |
| BSP width (μm) | | 220 | 230 | 235 | 233 | 231 | 240 | 300 |

As can be seen from the results in Tables 3 and 4, the acrylic copolymer resin compositions of Examples 1-6 showed excellent flame retardancy, scratch resistance, impact resistance and transmittance. The resin compositions of Examples 1-6, each including the monomer represented by Formula 1 in an amount of 35% by weight or more with respect to the weight of the base resin including (A) and (B), had better flame retardancy ratings than the resin composition of Comparative Example 1. The acrylic copolymer resin compositions of Examples 1-5 including the transparent soft acrylate resin had better flame retardancy ratings, scratch resistance, impact resistance and transmittances than the resin compositions of Comparative Examples 2-6. The use of the transparent soft acrylate resin within the content range defined in the present invention led to an improvement in the impact resistance of the resin compositions while maintaining

the flame retardancy rating and transmittance of the resin compositions (see Examples 1-6 and Comparative Example 7).

## Claims

1. An acrylic copolymer resin composition comprising

   (A) a phosphorus-containing acrylic copolymer,
   (B) a polymethyl methacrylate, and
   (C) a transparent soft acrylate resin,

   wherein the phosphorus-containing acrylic copolymer (A) and the polymethyl methacrylate (B) in amounts of 40 to 85% by weight and 15 to 60% by weight, respectively, based on the total weight of a base resin comprising the phosphorus-containing acrylic copolymer (A) and the polymethyl methacrylate (B), and the transparent soft acrylate resin in an amount of 1 to 18 parts by weight, based on 100 parts by weight of the base resin,
   wherein the transparent soft acrylate resin has a surface hardness of 70 or less, as measured on a 0.2 ± 0.1 μm thick specimen using a durometer,
   wherein the transparent soft acrylate resin has a total light transmittance of 88% or more, as evaluated on a 3 mm thick specimen in accordance with ASTM D1003.

2. The acrylic copolymer resin composition according to claim 1, wherein the phosphorus-containing acrylic copolymer is a copolymer of monomers represented by Formula 1 and 2:

   [Formula 1]

   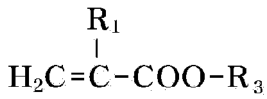

   wherein $R_1$ is -H or $-(CH_2)_n-CH_3$, n is an integer from 0 to 5, $R_3$ is

   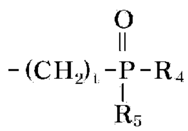,

   t is an integer from 0 to 10, $R_4$ and $R_5$ are each independently $-(O)_p(CH_2)_qX$, p is an integer from 0 or 1, q is an integer from 0 to 5, and X comprises methyl, cyclohexyl, phenyl, methylphenyl, methylethylphenyl, propylphenyl, methoxyphenyl, cyclohexylphenyl, chlorophenyl, bromophenyl, phenylphenyl and benzylphenyl groups; and

   [Formula 2]

   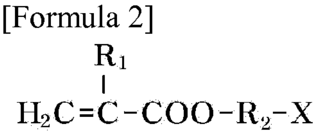

   wherein $R_1$ is -H or $-(CH_2)_n-CH_3$, n is an integer from 0 to 5, $R_2$ is $-(CH_2)_m-$, m is an integer from 0 to 10, and X comprises methyl, cyclohexyl, phenyl, methylphenyl, methylethylphenyl, propylphenyl, methoxyphenyl, cyclohexylphenyl, chlorophenyl, bromophenyl, phenylphenyl and benzylphenyl groups.

3. The acrylic copolymer resin composition according to claim 2, wherein the monomer represented by Formula 1 is present in an amount of at least 35 mol%, based on the base resin.

4. The acrylic copolymer resin composition according to claim 2, wherein the monomer represented by Formula 1 is present in an amount of 20 to 70 mol%, based on the phosphorus-containing acrylic copolymer.

5. The acrylic copolymer resin composition according to claim 1, wherein the transparent soft acrylate resin has a

structure in which a vinyl monomer is grafted onto an acrylic rubber core.

6. The acrylic copolymer resin composition according to claim 1, wherein the transparent soft acrylate resin has a refractive index of 1.485 to 1.51, as measured on a 2.5 mm thick specimen.

7. The acrylic copolymer resin composition according to claim 1, further comprising a phosphorus-based flame retardant.

8. The acrylic copolymer resin composition according to claim 7, wherein the phosphorus-based flame retardant is represented by Formula 3 or 4:

[Formula 3]

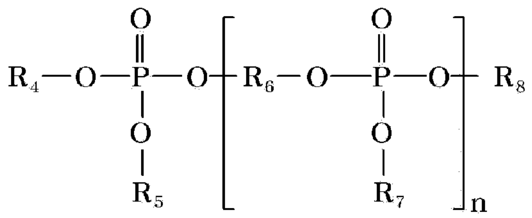

wherein $R_4$, $R_5$, $R_7$ and $R_8$ are each independently a $C_6$-$C_{20}$ aryl group or a $C_6$-$C_{20}$ aryl group substituted with $C_1$-$C_{20}$ alkyl group, $R_6$ is a moiety derived from resorcinol, hydroquinol, bisphenol-A or bisphenol-S as a dialcohol, and n is an integer from 0 to 10;

[Formula 4]

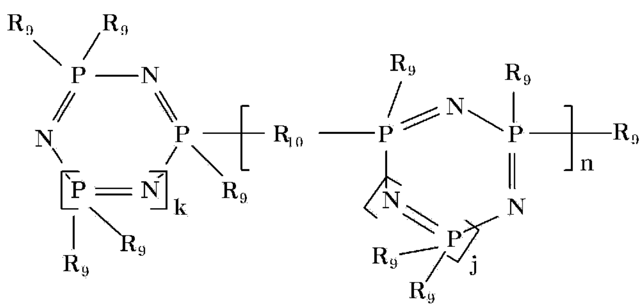

wherein each $R_9$ represents a substituent independently selected from $C_1$-$C_{20}$ alkyl groups, $C_6$-$C_{20}$ aryl groups, $C_6$-$C_{20}$ aryl groups substituted with $C_1$-$C_{20}$ alkyl, $C_6$-$C_{20}$ aralkyl groups, $C_1$-$C_{20}$ alkoxy groups, $C_6$-$C_{20}$ aryloxy groups, amino groups, or hydroxyl group, k and j are each independently an integer from 0 to 10, the $C_1$-$C_{20}$ alkoxy groups or $C_6$-$C_{20}$ aryloxy groups is optionally substituted with at least one $C_1$-$C_{20}$ alkyl groups, $C_6$-$C_{20}$ aryl groups, amino groups or hydroxyl groups, $R_{10}$ is a moiety derived from a $C_6$-$C_{20}$ dioxyaryl group or a $C_6$-$C_{20}$ dioxyaryl group substituted with $C_1$-$C_{20}$ alkyl, and n representing the number-average degree of polymerization is an average of 0.3 to 3; or a mixture of the phosphorus-based flame retardants represented by Formula 3 and 4.

9. The acrylic copolymer resin composition according to claim 1, further comprising one or more additives comprising anti-drip agents, impact-reinforcing agents, antioxidants, plasticizers, heat stabilizers, light stabilizers, compatibilizers, pigments, dyes, inorganic additives, antibacterial agents, and antistatic agents.

10. The acrylic copolymer resin composition according to claim 1, wherein the acrylic copolymer resin composition has a total light transmittance of 85% or more, as evaluated on a 2.5 mm thick specimen in accordance with ASTM D1003.

11. The acrylic copolymer resin composition according to claim 1, wherein the acrylic copolymer resin composition has a scratch width of 260 μm to 290 μm, as measured on a 3.2 mm thick specimen by a ball-type scratch profile (BSP) test.

**Patentansprüche**

1. Acryl-Copolymer-Harzzusammensetzung, umfassend

   (A) ein phosphorhaltiges Acryl-Copolymer,
   (B) ein Polymethylmethacrylat, und
   (C) ein transparentes weiches Acrylat-Harz,

   wobei das phosphorhaltige Acryl-Copolymer (A) und das Polymethylmethacrylat (B) in Mengen von 40 bis 85 Gewichts-% bzw. 15 bis 60 Gewichtsprozent, bezogen auf das Gesamtgewicht eines Grundharzes umfassend das phosphorhaltige Acryl-Copolymer (A) und das Polymethylmethacrylat (B), vorliegen, und das transparente weiche Acrylat-Harz in einer Menge von 1 bis 18 Gewichtsteile, bezogen auf 100 Gewichtsteile des Grundharzes, vorliegt, wobei das transparente weiche Acrylat-Harz eine Oberflächenhärte von 70 oder mehr aufweist, wie gemessen an einer 0,2 $\pm$ 0,1 $\mu$m dicken Probe unter Verwendung eines Durometers, wobei das transparente weiche Acrylat-Harz eine gesamte Lichtdurchlässigkeit von 88 % oder mehr aufweist, wie an einer 3 mm dicken Probe gemäß ASTM D1003 bewertet.

2. Acryl-Copolymer-Harzzusammensetzung gemäß Anspruch 1, wobei das phosphorhaltige Acryl-Copolymer ein Copolymer von durch Formel 1 und 2 dargestellten Monomeren ist:

   [Formel 1]

   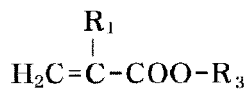

   wobei $R_1$ -H oder $-(CH_2)_n-CH_3$ ist, n eine ganze Zahl von 0 bis 5 ist, $R_3$

   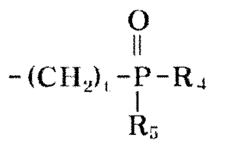

   ist, t eine ganze Zahl von 0 bis 10 ist, $R_4$ und $R_5$ jeweils unabhängig $-(O)_p(CH_2)_qX$ sind, p eine ganze Zahl aus 0 oder 1 ist, q eine ganze Zahl von 0 bis 5 ist, und X Methyl-, Cyclohexyl-, Phenyl-, Methylphenyl-, Methylethylphenyl-, Propylphenyl-, Methoxyphenyl-, Cyclohexylphenyl-, Chlorphenyl-, Bromphenyl-, Phenylphenyl- und Benzylphenyl-Gruppen umfasst; und

   [Formel 2]

   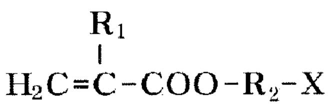

   wobei $R_1$ -H oder $-(CH_2)_n-CH_3$ ist, n eine ganze Zahl von 0 bis 5 ist, $R_2$ $-(CH_2)_m$ ist, m eine ganze Zahl von 0 bis 10 ist, und X Methyl-, Cyclohexyl-, Phenyl-, Methylphenyl-, Methylethylphenyl-, Propylphenyl-, Methoxyphenyl-, Cyclohexylphenyl-, Chlorphenyl-, Bromphenyl-, Phenylphenyl- und Benzylphenyl-Gruppen umfasst.

3. Acryl-Copolymer-Harzzusammensetzung gemäß Anspruch 2, wobei das durch Formel 1 dargestellte Monomer in einer Menge von wenigstens 35 Mol-%, bezogen auf das Grundharz, vorliegt.

4. Acryl-Copolymer-Harzzusammensetzung gemäß Anspruch 2, wobei das durch Formel 1 dargestellte Monomer in einer Menge von 20 bis 70 Mol-%, bezogen auf das phosphorhaltige Acryl-Copolymer, vorliegt.

**5.** Acryl-Copolymer-Harzzusammensetzung gemäß Anspruch 1, wobei das transparente weiche Acrylat-Harz eine Struktur aufweist, in welchem ein Vinylmonomer auf einen Acryl-Kautschukkern gepfropft ist.

**6.** Acryl-Copolymer-Harzzusammensetzung gemäß Anspruch 1, wobei das transparente weiche Acrylat-Harz einen Brechungsindex von 1,485 bis 1,51, wie an einer 2,5 mm dicken Probe gemessen, aufweist.

**7.** Acryl-Copolymer-Harzzusammensetzung gemäß Anspruch 1, weiterhin umfassend ein Flammschutzmittel auf Phosphorbasis.

**8.** Acryl-Copolymer-Harzzusammensetzung gemäß Anspruch 7, wobei das Flammschutzmittel auf Phosphorbasis durch Formel 3 oder 4 dargestellt wird:

[Formel 3]

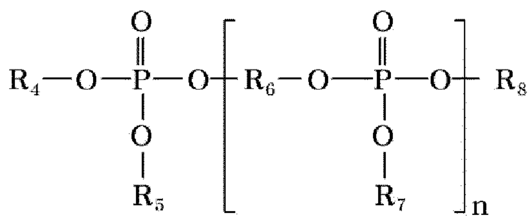

wobei $R_4$, $R_5$, $R_7$ und $R_8$ jeweils unabhängig eine $C_6$-$C_{20}$-Aryl-Gruppe oder eine mit einer $C_1$-$C_{20}$-Alkyl-Gruppe substituierte $C_6$-$C_{20}$-Aryl-Gruppe sind, $R_6$ eine von Resorcin, Hydrochinon bzw. Hydrochinol, Bisphenol-A oder Bisphenol-S als einem Dialkohol abgeleitete Einheit ist, und n eine ganze Zahl von 0 bis 10 ist;

[Formel 4]

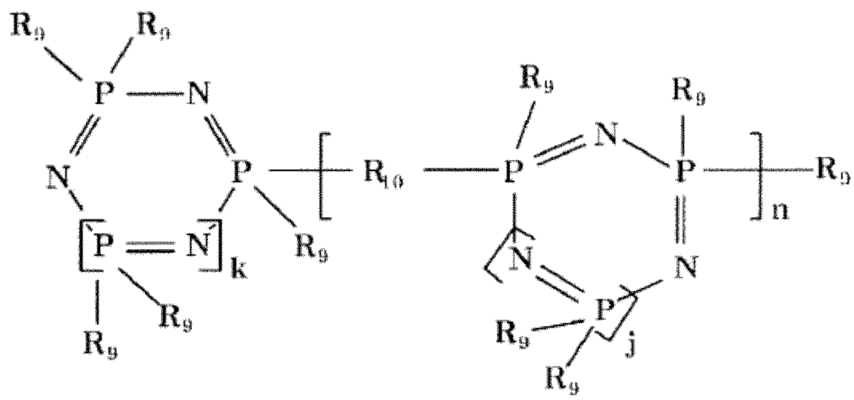

wobei $R_9$ jeweils einen Substituenten darstellt unabhängig ausgewählt aus $C_1$-$C_{20}$-Alkyl-Gruppen, $C_6$-$C_{20}$-Aryl-Gruppen, $C_6$-$C_{20}$-Aryl-Gruppen substituiert mit einem $C_1$-$C_{20}$-Alkyl, $C_6$-$C_{20}$-Aralkyl-Gruppen, $C_1$-$C_{20}$-AlkoxyGruppen, $C_6$-$C_{20}$-Aryloxy-Gruppen, Aminogruppen oder Hydroxyl-Gruppe, k und j jeweils unabhängig eine ganze Zahl von 0 bis 10 sind, die $C_1$-$C_{20}$-Alkoxy-Gruppen oder $C_6$-$C_{20}$-Aryloxy-Gruppen gegebenenfalls substituiert sind mit wenigstens einer $C_1$-$C_{20}$-Alkyl-Gruppe, $C_6$-$C_{20}$-Aryl-Gruppe, Aminogruppe oder Hydroxyl-Gruppe, $R_{10}$ eine Einheit ist, die abgeleitet ist von einer $C_6$-$C_{20}$-Dioxyaryl-Gruppe oder einer $C_6$-$C_{20}$-Dioxyaryl-Gruppe substituiert mit $C_1$-$C_{20}$-Alkyl, und n, welches den zahlengemittelten Grad der Polymerisation darstellt, durchschnittlich 0,3 bis 3 ist; oder ein Gemisch der durch Formel 3 und 4 dargestellten Flammschutzmittel auf Phosphorbasis.

**9.** Acryl-Copolymer-Harzzusammensetzung gemäß Anspruch 1, weiterhin umfassend ein oder mehrere Additive umfassend Anti-Tropfmittel, Schlagzähmodifizier, Antioxidationsmittel, Weichmacher, Wärmestabilisatoren, Lichtstabilisatoren, Verträglichkeitsmacher bzw. Kompatibilisierungsmittel, Pigmente, Farbstoffe, anorganische Additive, antibakterielle Mittel, und antistatische Mittel.

**10.** Acryl-Copolymer-Harzzusammensetzung gemäß Anspruch 1, wobei die Acryl-Copolymer-Harzzusammensetzung eine gesamte Lichtdurchlässigkeit von 85 % oder mehr aufweist, wie an einer 2,5 mm dicken Probe gemäß ASTM D1003 bewertet.

**11.** Acryl-Copolymer-Harzzusammensetzung gemäß Anspruch 1, wobei die Acryl-Copolymer-Harzzusammensetzung eine Kratz-Breite von 260 μm bis 290 μm aufweist, wie an einer 3,2 mm dicken Probe durch einen Kratz-Profil (BSP)-Test vom Kugel-Typ gemessen.

## Revendications

**1.** Composition d'une résine d'un copolymère acrylique, comprenant

(A) un copolymère acrylique phosphoré,
(B) un poly(méthacrylate de méthyle), et
(C) une résine d'acrylate souple transparente,

dans laquelle le copolymère acrylique phosphoré (A) et le poly(méthacrylate de méthyle) (B) sont présents en des quantités respectivement de 40 à 85 % en poids et de 15 à 60 % en poids par rapport au poids total d'une résine de base comprenant le copolymère acrylique phosphoré (A) et le poly(méthacrylate de méthyle) (B), et la résine d'acrylate souple transparente est présente en une quantité de 1 à 18 parties en poids pour 100 parties en poids de la résine de base,
la résine d'acrylate souple transparente présentant une dureté de surface de 70 ou moins, telle que mesurée sur une éprouvette de 0,2 ± 0,1 μm d'épaisseur par utilisation d'un duromètre,
la résine d'acrylate souple transparente présentant un facteur total de transmission de la lumière de 88 % ou plus, tel qu'évalué sur une éprouvette de 3 mm d'épaisseur conformément à ASTM D1003.

**2.** Composition d'une résine d'un copolymère acrylique selon la revendication 1, dans laquelle le copolymère acrylique phosphoré est un copolymère de monomères représentés par les formules 1 et 2 :

[Formule 1]

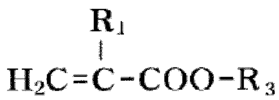

dans laquelle $R_1$ représente -H ou $-(CH_2)_n-CH_3$, n représente un entier de 0 à 5, $R_3$ représente

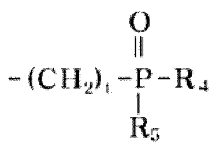
,

t représente un entier de à 10, $R_4$ et $R_5$ représentent chacun indépendamment de l'autre $-(O)_p(CH_2)_qX$, p représente un entier valant 0 ou 1, q est un entier de 0 à 5, et X comprend les groupes méthyle, cyclohexyle, phényle, méthylphényle, méthyléthylphényle, propylphényle, méthoxyphényle, cyclohexylphényle, chlorophényle, bromophényle, phénylphényle et benzylphényle ; et

[Formule 2]

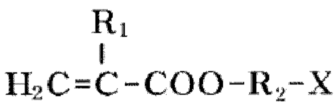

dans laquelle $R_1$ représente -H ou $-(CH_2)_n-CH_3$, n représente un entier de 0 à 5, $R_2$ représente $-(CH_2)_m-$, m représente un entier de 0 à 10, et X comprend les groupes méthyle, cyclohexyle, phényle, méthylphényle, méthyléthylphényle,

propylphényle, méthoxyphényle, cyclohexylphényle, chlorophényle, bromophényle, phénylphényle et benzylphényle.

3. Composition d'une résine d'un copolymère acrylique selon la revendication 2, dans laquelle le monomère représenté par la formule 1 est présent en une quantité d'au moins 35 % en moles par rapport à la résine de base.

4. Composition d'une résine d'un copolymère acrylique selon la revendication 2, dans laquelle le monomère représenté par la formule 1 est présent en une quantité de 20 à 70 % en moles par rapport au copolymère acrylique phosphoré.

5. Composition d'une résine d'un copolymère acrylique selon la revendication 1, dans laquelle la résine d'acrylate souple transparente présente une structure dans laquelle un monomère vinylique est greffé sur un coeur de caoutchouc acrylique.

6. Composition d'une résine d'un copolymère acrylique selon la revendication 1, dans laquelle la résine d'acrylate souple transparente présente un indice de réfraction de 1,485 à 1,51, tel que mesuré sur une éprouvette de 2,5 mm d'épaisseur.

7. Composition d'une résine d'un copolymère acrylique selon la revendication 1, qui comprend en outre un retardateur de flamme phosphoré.

8. Composition d'une résine d'un copolymère acrylique selon la revendication 7, dans laquelle le retardateur de flamme phosphoré est représenté par la formule 3 ou 4

[Formule 3]

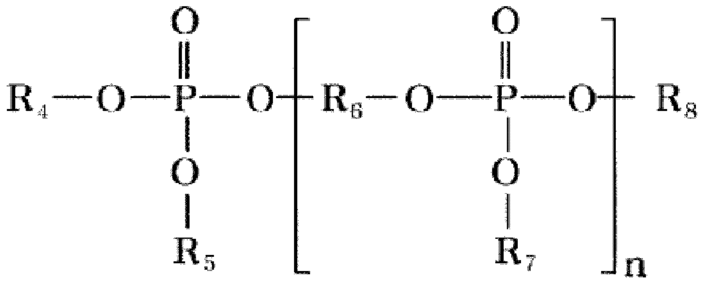

dans laquelle $R_4$, $R_5$, $R_7$ et $R_8$ représentent chacun indépendamment des autres un groupe aryle en $C_6$-$C_{20}$ ou un groupe aryle en $C_6$-$C_{20}$ substitué par un groupe alkyle en $C_1$-$C_{20}$, $R_6$ représente un fragment qui dérive du résorcinol, de l'hydroquinone, du bisphénol-A ou du bisphénol-S en tant que dialcool, et n représente un entier de 0 à 10 ;

[Formule 4]

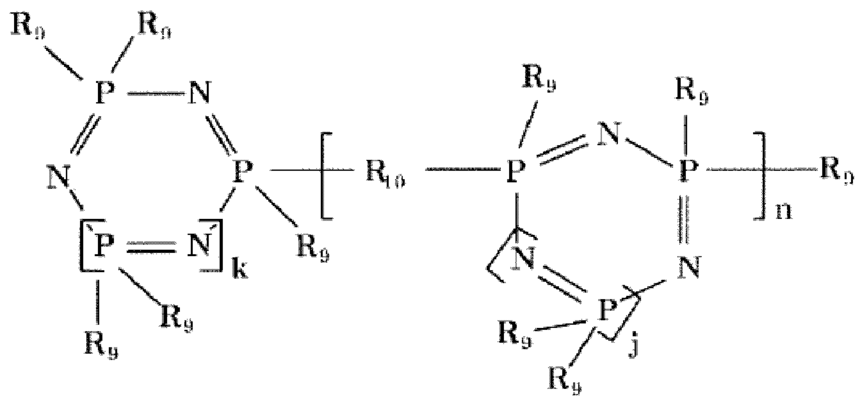

dans laquelle chaque $R_9$ représente un substituant choisi d'une manière indépendante parmi les groupes alkyle en $C_1$-$C_{20}$, les groupes aryle en $C_6$-$C_{20}$, les groupes aryle en $C_6$-$C_{20}$ substitués par un alkyle en $C_1$-$C_{20}$, les groupes aralkyle en $C_6$-$C_{20}$, les groupes alcoxy en $C_1$-$C_{20}$, les groupes aryloxy en $C_6$-$C_{20}$, les groupes amino ou le groupe hydroxy, k et j représentent chacun indépendamment de l'autre un entier de 0 à 10, les groupes alcoxy en $C_1$-$C_{20}$

ou les groupes aryloxy en $C_6$-$C_{20}$ sont en option substitués par au moins un groupe alkyle en $C_1$-$C_{20}$, groupe aryle en $C_6$-$C_{20}$, groupe amino ou groupe hydroxyle, $R_{10}$ est un fragment qui dérive d'un groupe dioxyaryle en $C_6$-$C_{20}$ ou d'un groupe dioxyaryle en $C_6$-$C_{20}$ substitué par un alkyle en $C_1$-$C_{20}$, et n, représentant le degré de polymérisation moyen en nombre, représente en moyenne 0,3 à 3 ; ou un mélange des retardateurs de flamme phosphorés représentés par le formules 3 et 4.

**9.** Composition d'une résine d'un copolymère acrylique selon la revendication 1, qui comprend en outre un ou plusieurs additifs comprenant les agents anti-goutte, les agents augmentant la résistance au choc, les antioxydants, les plastifiants, les thermostabilisants, les photostabilisants, les agents de compatibilisation, les pigments, les colorants, les additifs inorganiques, les agents antibactériens et les agents antistatiques.

**10.** Composition d'une résine d'un copolymère acrylique selon la revendication 1, la composition d'une résine d'un copolymère acrylique présentant un facteur total de transmission de la lumière de 85 % ou plus, tel qu'évalué sur une éprouvette de 2,5 mm d'épaisseur conformément à ASTM D1003.

**11.** Composition d'une résine d'un copolymère acrylique selon la revendication 1, la composition d'une résine d'un copolymère acrylique présentant une largeur de rayure de 260 μm à 290 μm, telle que mesurée sur une éprouvette de 3,2 mm par un essai du profil de rayure (BSP) à bille.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008120854 A1
- US 6319966 B1
- US 3030347 A